(19) Europäisches Patentamt
European Patent Office
Office européen des brevets

(11) **EP 4 024 287 B1**

(12) **EUROPEAN PATENT SPECIFICATION**

(45) Date of publication and mention
of the grant of the patent:
**29.04.2026 Bulletin 2026/18**

(21) Application number: **20858492.0**

(22) Date of filing: **26.08.2020**

(51) International Patent Classification (IPC):
*G06F 7/483* (2006.01)     *G06F 18/214* (2023.01)
*G06F 18/2413* (2023.01)     *G06N 3/048* (2023.01)
*G06N 3/084* (2023.01)     *G06N 3/0495* (2023.01)

(52) Cooperative Patent Classification (CPC):
**G06N 3/084; G06F 7/483; G06F 18/214;
G06F 18/24133; G06N 3/048; G06N 3/0495**

(86) International application number:
**PCT/CN2020/111489**

(87) International publication number:
**WO 2021/037082 (04.03.2021 Gazette 2021/09)**

(54) **METHOD AND APPARATUS FOR PROCESSING DATA, AND RELATED PRODUCT**

VERFAHREN UND VORRICHTUNG ZUR DATENVERARBEITUNG UND ENTSPRECHENDES PRODUKT

PROCÉDÉ ET APPAREIL DE TRAITEMENT DE DONNÉES, ET PRODUIT ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2019  CN 201910804625**

(43) Date of publication of application:
**06.07.2022  Bulletin 2022/27**

(73) Proprietor: **Shanghai Cambricon Information
Technology Co., Ltd
Shanghai 201306 (CN)**

(72) Inventors:
• **ZHANG, Yao**
  **Shanghai 201306 (CN)**
• **JIANG, Guang**
  **Shanghai 201306 (CN)**
• **ZHANG, Xishan**
  **Shanghai 201306 (CN)**
• **ZHOU, Shiyi**
  **Shanghai 201306 (CN)**
• **HUANG, Di**
  **Shanghai 201306 (CN)**
• **LIU, Chang**
  **Shanghai 201306 (CN)**

• **GUO, Jiaming**
  **Shanghai 201306 (CN)**

(74) Representative: **Boult Wade Tennant LLP
Salisbury Square House
8 Salisbury Square
London EC4Y 8AP (GB)**

(56) References cited:
CN-A- 107 197 297     CN-A- 107 665 364
CN-A- 109 934 761     CN-A- 109 993 296
KR-A- 20100 087 845     US-A1- 2019 095 777

• PELUSO VALENTINO ET AL: "Enabling Energy-Efficient Unsupervised Monocular Depth Estimation on ARMv7-Based Platforms", 2019 DESIGN, AUTOMATION & TEST IN EUROPE CONFERENCE & EXHIBITION (DATE), EDAA, 25 March 2019 (2019-03-25), pages 1703 - 1708, XP033550041, DOI: 10.23919/DATE.2019.8714893
• WANG KUAN ET AL: "HAQ: Hardware-Aware Automated Quantization With Mixed Precision", 6 April 2019 (2019-04-06), pages 8604 - 8612, XP055839529, ISBN: 978-1-7281-3293-8, Retrieved from the Internet <URL:https://arxiv.org/pdf/1811.08886.pdf> [retrieved on 20210909], DOI: 10.1109/CVPR.2019.00881

**Description**

## TECHNICAL FIELD

Embodiments of the present disclosure relate to the technical field of computer technology, and specifically to a method and an apparatus for processing data and related products.

## BACKGROUND

With continuous development, artificial intelligence technology is applied in more and more extensive fields and has been well applied in fields of image recognition, speech recognition, natural language processing and the like. However, as the complexity and accuracy of artificial intelligence algorithms increase, machine learning models are getting larger and larger, and the amount of data that needs to be processed is also getting larger. When a large amount of data is processed, large calculation and time overhead are required, and the processing efficiency is low

The publication entitled "Enabling Energy-Efficient Unsupervised Monocular Depth Estimation on ARMv7-Based Platforms" by Peluso et al. (digital object identifier 10.23919/DATE.2019.8714893) and US 2019/095777 A1 are further prior art.

## SUMMARY

The present invention is defined by the appended independent claims. Preferred embodiments are set forth in the dependent claims.

In view of this, embodiments of the present disclosure provide a method and an apparatus for processing data and related products.

A first aspect of the present disclosure provides a method for processing data. The method includes: obtaining a group of data to be quantized for a machine learning model; quantizing the group of data to be quantized respectively through using a plurality of pairs of truncation thresholds to determine a plurality of groups of quantized data, where each pair of truncation thresholds in the plurality of pairs of truncation thresholds includes a truncation positive value and a truncation negative value that are symmetrical; and selecting a pair of truncation thresholds from the plurality of pairs of truncation thresholds to quantize the group of data to be quantized based on the difference between a mean value of an absolute value of each group of quantized data in the plurality of groups of quantized data and an mean value of an absolute value of the group of data to be quantized.

A second aspect of the present disclosure provides an apparatus for processing data. The apparatus comprises: a data to be quantized obtaining unit, a quantized data determining unit, and a truncation threshold determining unit. The data to be quantized obtaining unit is configured to obtain a group of data to be quantized for a machine learning model. The quantized data determining unit is configured to quantize the group of data to be quantized respectively through using a plurality of pairs of truncation thresholds to determine a plurality of groups of quantized data, where each pair of truncation thresholds in the plurality of pairs of truncation thresholds includes a truncation positive value and a truncation negative value that are symmetrical. The truncation thresholds determining unit is configured to select a pair of truncation thresholds from a plurality of pairs of truncation thresholds to quantize a group of data to be quantized based on a difference between a mean value of an absolute value of each group of quantized data and a mean value of an absolute value of the group of data to be quantized to quantize the group of data to be quantized.

A third aspect of the present disclosure provides a computer readable storage medium, which stores a computer program. When the computer program is executed, a method of each embodiment according to the present disclosure is implemented.

A fourth aspect of the present disclosure provides an artificial intelligence chip, which includes an apparatus for processing data according to various embodiments of the present disclosure.

A fifth aspect of the present disclosure provides an electronic device, which includes the artificial intelligence chip according to various embodiments of the present disclosure.

A sixth aspect of the present disclosure provides a board card, which includes a storage component, an interface apparatus, a control component, and the artificial intelligence chip according to various embodiments of the present disclosure. The artificial intelligence chip is connected to the storage component, the control component, and the interface apparatus respectively; the storage component is configured to store data; the interface apparatus is configured to implement data transfer between the artificial intelligence chip and an external device; and the control component is configured to monitor a state of the artificial intelligence chip.

Through the derivation of technical features in the claims, technical effect of the technical problems in the background may be achieved. According to the following detailed description of exemplary embodiments with reference to the drawings, other features and aspects of the present disclosure will become clear.

## BRIEF DESCRIPTION OF THE DRAWINGS

The drawings are included in the specification and constitute a part of the specification. Together with the specification, the drawings illustrate exemplary embodiments, features, and aspects of the present disclosure and are used to explain principles of the present disclosure.

FIG. 1 is a schematic diagram of a processing system of a method for data processing according to an embodiment of the present disclosure.

FIG. 2 is a schematic diagram of an exemplary architecture of a neural network according to an embodiment of the present disclosure.

FIG. 3 is a schematic diagram of a process for data quantization according to an embodiment of the present disclosure.

FIG. 4A is a schematic diagram for quantizing data symmetrically according to an embodiment of the present disclosure.

FIG. 4B is a schematic diagram for quantizing data symmetrically based on truncation thresholds according to an embodiment of the present disclosure.

FIG. 5 is a flowchart of a method for processing data according to an embodiment of the present disclosure.

FIG. 6 is a flowchart of a method for searching truncation thresholds for symmetric quantization according to an embodiment of the present disclosure.

FIG. 7A is a schematic diagram for searching for truncation thresholds for symmetric quantization in a coarse-grained manner according to an embodiment of the present disclosure.

FIG. 7B is a schematic diagram for searching for truncation thresholds for symmetric quantization in a fine-grained manner according to an embodiment of the present disclosure.

FIG. 8 is a flowchart of a method for iteratively searching for optimal truncation thresholds according to an embodiment of the present disclosure.

FIG. 9 is a diagram of an apparatus for processing data according to an embodiment of the present disclosure; and

FIG. 10 is a structural diagram of a board card according to an embodiment of the present disclosure.

## DETAILED DESCRIPTION OF THE EMBODIMENTS

Technical solutions in embodiments of the present disclosure will be described clearly and completely hereinafter with reference to the drawings in the embodiments of the present disclosure. Obviously, the embodiments to be described are merely some of, but not all of embodiments of the present disclosure. All other embodiments obtained by those of ordinary skill in the art based on the embodiments of the present disclosure without creative efforts shall fall within the protection scope of the present disclosure.

It should be understood that terms such as "first", "second", "third", and "fourth" in the claims, the specification, and drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or more other features, entities, steps, operations, elements, components, and/or collections thereof.

It should also be understood that the terms used in the specification of the present disclosure are merely for the purpose of describing particular embodiment rather than limiting the present disclosure. As being used in the specification and the claims of the disclosure, unless the context clearly indicates otherwise, the singular forms "a", "an" and "the" are intended to include the plural forms. It should also be understood that the term "and/or" used in the specification and the claims refers to any or all possible combinations of one or more of relevant listed items and includes these combinations.

As being used in this specification and the claim, the term "if" may be interpreted as "when", or "once" or "in response to a determination" or "in response to a case where something is detected" depending on the context. Similarly, depending on the context, the clause "if it is determined that" or "if [a described condition or event] is detected" may be interpreted as "once it is determined that", or "in response to a determination", or "once [a described condition or event] is detected", or "in response to a case where [a described condition or event] is detected".

Generally speaking, when quantizing data, if a wide value range is selected, precision of quantized data will be low, and if the value range is too small, too much data will be truncated, resulting in information loss of the data distributed on both sides. The value range refers to the value range between a minimum truncation threshold used to quantize the data and a maximum truncation threshold used to quantize the data. Therefore, it is necessary to find a pair of suitable truncation thresholds to quantize the data, so that a loss of data quantization is minimal or small. Traditionally, a Kullback-Leibler divergence (KL divergence) method is used to determine optimal truncation thresholds, where the KL divergence may determine a correlation between the data before and after the quantization. The KL divergence is also known as relative entropy, information divergence, and information gain. The KL divergence is a measure of a difference between two probability distributions P and Q. Assuming that a 32-bit floating-point number distribution before the quantization is P, and a 8-bit integer distribution after the quantization is Q, then as long as the KL divergence between P and Q is smaller, the closer the distributions before and after quantization, the more effective the quantization. However, the inventor of the present disclosure finds that a quantization effect achieved by the truncation thresholds obtained by the traditional KL method is not good and usually causes a large loss of precision.

To this end, the embodiments of the present disclosure propose a new solution for determining truncation thresholds for symmetric quantization, which may achieve a smaller loss of quantization precision than traditional technologies (such as the KL method). According to an embodiment of the present disclosure, after obtaining a group of data to be quantized for a machine learning model, a plurality of pairs of truncation thresholds are used to quantize the group of data to be quantized respectively to determine a plurality of groups of quantized data, where each pair of truncation thresholds in the plurality of pairs of truncation thresholds includes a truncation positive value and a truncation negative value that are symmetrical. Then, a difference between a mean value of an absolute value of each group of quantized data and a mean value of an absolute value of the group of data to be quantized is used as an evaluation index to select a suitable pair of truncation thresholds from the plurality of pairs of truncation thresholds. In this way, more suitable truncation thresholds may be found.

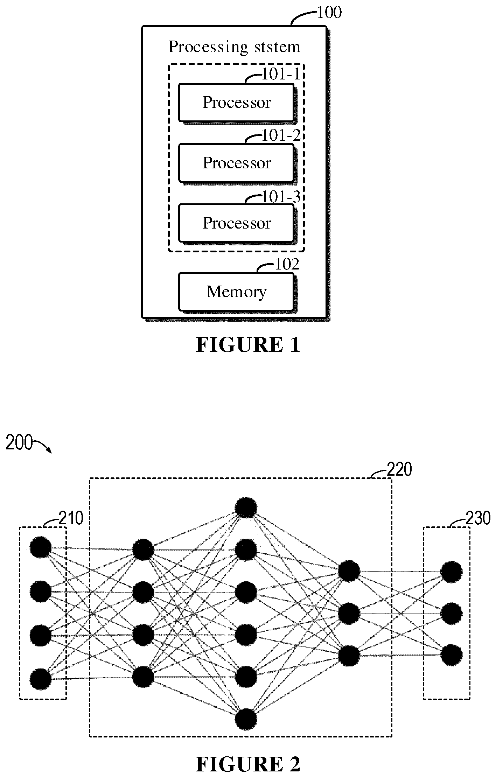

Basic principles and several example implementations of the present disclosure are described below with reference to FIG. 1 to FIG. 10. It should be understood that these exemplary embodiments are given only to enable those skilled in the art to better understand and then implement the embodiments of the present disclosure, but not to limit the scope of the present disclosure in any way.

FIG. 1 is a schematic diagram of a processing system 100 for data processing according to an embodiment of the present disclosure. As shown in FIG. 1, the processing system 100 may include a plurality of processors 101-1,101-2, 101-3 (collectively referred to as processors 101) and a memory 102. The processors 101 are configured to execute an instruction sequence, and the memory 102 is configured to store data. The memory 102 may include a random-access memory (RAM) and a register file. The plurality of processors 101 in the processing system 100 may share part of a storage space such as part of a RAM storage space and the register file, and may also have their own storage spaces at the same time.

It should be understood that various methods according to the embodiments of the present disclosure may be applied to any one processor of the processing system 100 (such as an artificial intelligence chip) including a plurality of processors (multi-core). The processor may be a general-purpose processor, for example, a central processing unit (CPU) or an intelligence processing unit (IPU) for performing artificial intelligence computations. The artificial intelligence computations may include machine learning computations, brain-like computations, and the like. The machine learning computations may include neural network computations, k-means computations, support vector machine computations, and the like. The artificial intelligence processor may include one or a combination of, for example, a graphics processing unit (GPU), a neural-network processing unit (NPU), a digital signal processing (DSP) unit, and a field-programmable gate array (FPGA) chip. The present disclosure does not limit the specific types of the processors. In addition, the types of the plurality of processors in the processing system 100 may be the same or different, which is not limited in the present disclosure.

In a possible implementation, the processors mentioned in the present disclosure may include a plurality of processing units, and each processing unit may independently execute various assigned tasks, such as a convolution computation task, a pooling task, or a fully-connected task, and the like. The present disclosure does not limit the processing units and the tasks executed by the processing units.

FIG. 2 is a schematic diagram of an exemplary architecture of a neural network 200 according to an embodiment of the present disclosure. A neural network (NN) is a mathematical model which imitates structures and functions of a biological neural network and performs calculations through connecting a large number of neurons. Therefore, a neural network is a computational model composed of plenty of connected nodes (or called "neurons"). Each node represents a specific output function called an activation function. A connection between each two neurons represents a weighted value that passes through the connection signal and is called a weight. The weight may be viewed as "memory" of the neural network. An output of the neural network varies with different connection methods between neurons, different weights, and different activation functions. The neuron is a basic unit of the neural network, which obtains a certain count of inputs and a bias. The certain count of inputs and the bias are multiplied by a weight when a signal (value) arrives. The connection refers to connecting one neuron to another neuron in another layer or a same layer, and the connection is accompanied by an associated weight. In addition, the bias is an extra input of the neuron, which is always 1 and has its own connection weight. This ensures that the neuron may be activated even if all inputs are empty (all 0).

In applications, if no non-linear function is applied to the neuron in the neural network, the neural network is only a linear function and is not powerful than a single neuron. If an output result of a neural network is between 0 and 1, for example, in a case of cat and dog identification, an output close to 0 may be regarded as a cat and an output close to 1 may be regarded as a dog. The activation function such as a sigmoid activation function is introduced into the neural network to realize the cat and dog identification. A return value of the activation function is a number between 0 and 1. Therefore, the activation function is configured to introduce non-linearity into the neural network, which may narrow down the range of a neural network computation result. In fact, how the activation function is represented is not important, and what is important is to parameterize a non-linear function by some weights, thus the non-linear function may be changed by changing the weights.

FIG. 2 is a schematic structural diagram of the neural network 200. The neural network shown in FIG. 2 contains three layers: an input layer 210, a hidden layer 220, and an output layer 230. The hidden layer 220 shown in FIG. 2 contains three layers. Of course, the hidden layer 220 may also include more or fewer layers, where the neuron in the input layer 210 is called an input neuron. As a first layer in the neural network, the input layer needs to input signals (values) and transmit the signals (values) to a next layer. The input layer does not perform any operation on the input signals (values) and has no associated weight or bias. The neural network shown in FIG. 2 may receive four input signals (values).

The hidden layer 220 is used to apply different changing neurons (nodes) to the input data. The hidden layer is a representation of neurons arranged vertically. The neural network shown in FIG. 2 contains three hidden layers. A first hidden layer contains four neurons (nodes), a second hidden layer contains six neurons, and a third hidden layer contains three neurons. Finally, the hidden layer transfers values to the output layer. In the neural network 200 shown in FIG. 2, each of the neurons in the three hidden layers is fully connected, and each of the neurons in three hidden layers is connected with each neuron in the next layer. It should be noted that in some neural networks, hidden layers may not be fully connected.

The neurons of the output layer 230 are called output neurons. The output layer receives an output from the last hidden layer. Through the output layer 230, a desired value and a desired range may be determined. In the neural network shown in FIG. 2, the output layer contains three neurons; in other words, the output layer contains three output signals (values).

In practical applications, the function of the neural network is to train a large amount of sample data (including input and output) in advance. After the training, the neural network is used to obtain an accurate output for the input from the real environment in the future

Before the discussion of a neural network training, a loss function needs to be defined. The loss function is a function indicating how well the neural network performs on a particular task. The most direct way to do this is to pass each sample data along the neural network to get a number during the training process, and then calculate a difference between this number and a wanted actual number, and then square the difference. What is calculated is a distance between a predicted value and a true value, and training the neural network is to reduce this distance or a value of the loss function.

At the beginning of the neural network training, the weight needs to be initialized randomly. It is apparent that an initialized neural network may not provide a good result. In the training process, if starting from the initialized neural network, a network with high precision may be obtained through the training. At the same time, it is also hoped that at the end of the training, the value of the loss function becomes particularly small.

A training process of the neural network includes two stages. A first stage is to perform a forward processing on a signal by sending the signal from the input layer 210 to the output layer 230 through the hidden layer 220. A second stage is to perform a back propagation on a gradient by propagating the gradient from the output layer 230 to the hidden layer 220, and finally to the input layer 210, and sequentially adjusting weights and biases of each layer in the neural network according to the gradient.

In the process of forward processing, an input value is input into the input layer 210 in the neural network and an output (called a predicted value) is obtained from the output layer 230 in the neural network. When the input value is provided to the input layer 210 in the neural network, the input layer 210 does not perform any operation. In the hidden layer, the second hidden layer obtains a predicted intermediate result value from the first hidden layer to perform a computation operation and an activation operation, and then sends the obtained predicted intermediate result value to the next hidden layer. The same operations are performed in the following layers to obtain the output value in the output layer 230 in the neural network.

After forward processing, the output value called the predicted value is obtained. In order to calculate an error produced in the forward process, the loss function is used to compare the predicted value with the actual output value to obtain the corresponding error. A chain rule of calculus is used in the back propagation. In the chain rule, derivatives of errors corresponding to the weights of the last layer in the neural network are calculated first. The derivatives are called gradients, which are then used to calculate gradients of a penultimate layer in the neural network. This process is repeated until the gradients of each weight in the neural network are obtained. Finally, the corresponding gradients are subtracted from the weights, and then the weights are updated once to reduce errors.

For the neural network, a fine-tuning refers to loading a trained neural network. The process of fine-tuning also includes two stages, which are the same as those of training. A first stage is to perform the forward processing on the signal, and a second stage is to perform the back propagation on the gradient to update weights in the trained neural network. A difference between training and fine-tuning is that the training refers to randomly processing the initialized neural network and starts from the beginning, while the fine-tuning does not start from the beginning.

In the process of training or fine-tuning the neural network, the weights in the neural network are updated based on the gradients once every time the neural network performs the forward processing on the signal and performs the corresponding back propagation on the error, and the whole process is called an iteration. In order to obtain a neural network with expected precision, a very large sample data set is required during the training process. In this case, it is impossible to input the sample data set into a computer at once. Therefore, in order to solve the problem, the sample data set needs to be divided into a plurality of blocks and then each block of the sample data set is passed to the computer. After the forward processing is performed on each block of the sample data set, the weights in the neural network are correspondingly updated once. When the neural network performs the forward processing on a complete sample data set and returns a weight update correspondingly, the process is called an epoch. In practice, it is not enough to perform the forward processing on the complete data set in the neural network only once. It is necessary to transmit the complete data set in the same neural network a plurality of times; in other words, a plurality of epochs is needed to obtain the neural network with expected precision.

In the process of neural network training or fine-tuning, it is usually hoped that the faster the better, and the higher the precision, the better. Since data in the neural network is represented in a high-precision data format such as floating-point numbers, all the data involved in the process of training or fine-tuning is in the high-precision data format and then the trained neural network is quantized. For example, when quantized objects are weights of a whole neural network and quantized weights are 8-bit fixed-point numbers, since the neural network usually contains millions of connections, almost all the space is occupied by weights that are connected with neurons. The weights are different floating-point numbers. The weights of each layer tend to be normally distributed in a certain interval, such as (-3.0, 3.0). A maximum value and a minimum value corresponding to the weights of each layer in the neural network are stored, and a value of each floating-point number is represented by an 8-bit fixed-point number. An interval within a range of the maximum value and the minimum value is linearly divided into 256 quantization intervals, in which each quantization interval is represented by the 8-bit fixed-point number. For example, in an interval of (- 3.0, 3.0), a byte 0 represents - 3.0 and a byte 255 represents 3.0. Similarly, a byte 128 represents 0.

For data represented in a high-precision data format such as floating-point numbers, based on rules of computation representation of floating-point and fixed-point numbers according to a computer architecture, for a fixed-point computation and a floating-point computation of the same length, a floating-point computation model is more complex and needs more logic components to build a floating-point computation unit. In other words, a volume of the floating-point computation unit is larger than the volume of a fixed-point computation unit. Moreover, the floating-point computation unit needs to consume more resources to process, so a gap of power consumption between the fixed-point computation unit and the floating-point computation unit is usually an order of magnitude. Therefore, the floating-point computation unit occupies many times more chip area and consumes many times more power than the fixed-point computation unit.

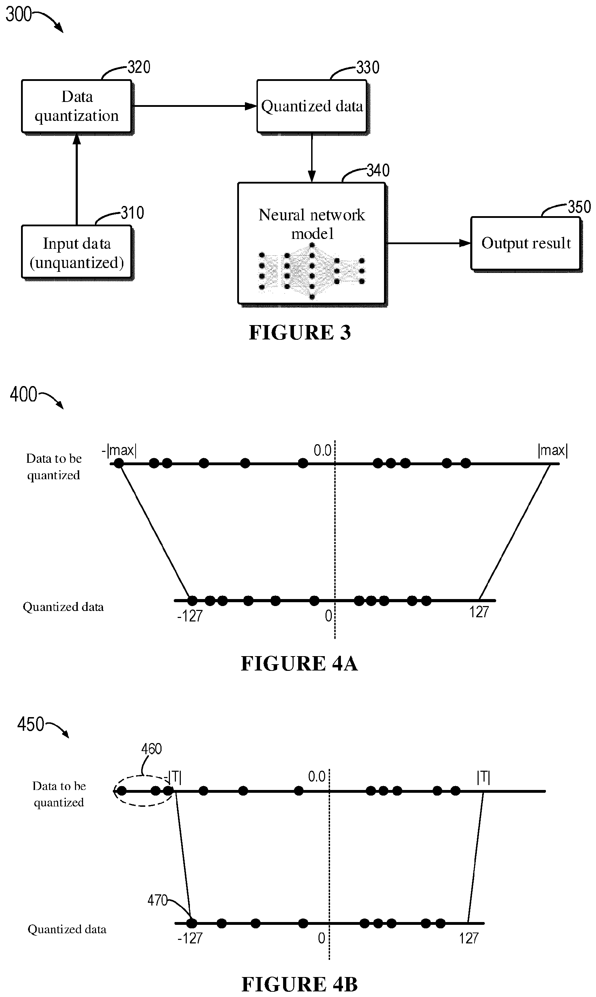

FIG. 3 is a schematic diagram of a process 300 for data quantization according to an embodiment of the present disclosure; Referring to FIG. 3, input data 310 is an unquantized floating-point number, such as a 32-bit floating point number. If the input data 310 is directly input to the neural network model 340 for processing, more computing resources maybe consumed, and the processing speed maybe slower. Therefore, the input data may be quantized at block 320 to obtain quantized data 330 (for example, an 8-bit integer). If the quantized data 330 is input into the neural network model 340 for processing, since an 8-bit integer calculation is faster, the neural network model 340 may complete the processing of the input data faster and generate a corresponding output result 350.

During the quantization process from the unquantized input data 310 to the quantized data 330, some precision loss may be caused to a certain extent, and the degree of precision loss may directly affect a precision of the output result 350. Therefore, in the quantization process of the input data 330, it is necessary to ensure that the precision loss of the quantization process is minimal or as small as possible.

FIG. 4A shows a schematic diagram 400 for quantizing data symmetrically according to an embodiment of the present disclosure; FIG. 4A shows the simplest symmetric quantization method. It directly selects a maximum absolute value of all values in the data to be quantized, which is |max|, and then performs the quantization in a range from -|max| to |max| to generate the quantized data. However, this method may cause a low precision in the quantized data because of no truncating.

FIG. 4B is a schematic diagram 450 for quantizing data symmetrically based on the truncation threshold according to an embodiment of the present disclosure. Different from the direct quantization method in FIG. 4A, a truncation threshold T is selected in FIG. 4B, and the data outside a range from -|T| to |T| may be set as a -|T| or a |T|. For example, in the example of FIG. 4B, three to-be-quantized values in circle 460 are outside the truncation range, so they may be treated as a value -|T| for quantization and quantized to a data point 470. In this way, the precision of the quantized data may be improved by using a truncation threshold to narrow down the value range of the data to be quantized. However, how to obtain a truncation threshold with the least loss of quantization precision is a technical problem that needs to be solved urgently.

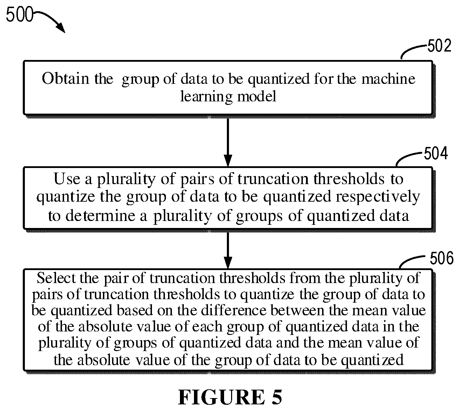

FIG. 5 is a flowchart of a method 500 for processing data according to an embodiment of the present disclosure; it should be understood that the method 500 may be executed by one or more processors 101 described in FIG.1.

The group of data to be quantized for the machine learning model is obtained at block 502. For example, the input data 310 to be quantized may be obtained by referring to FIG. 3, and the input data 310 may be quantized, thereby speeding up the processing speed of the neural network model 340. In addition, some parameters (such as weights) of the neural network model itself may also be quantized. By quantizing the network parameters, a size of the neural network model maybe reduced. In some embodiments, the data to be quantized maybe 32-bit floating-point numbers. Alternatively, the data to be quantized may also be floating-point numbers with other digits, or other data types.

At block 504, a plurality of pairs of truncation thresholds are used to quantize the group of data to be quantized respectively to determine a plurality of groups of quantized data, where each pair of truncation thresholds in the plurality of pairs of truncation thresholds includes a truncation positive value and a truncation negative value that are symmetrical. In the symmetric quantization solution, the truncation threshold is a symmetric pair of positive and negative values; in other words, the truncation threshold is a pair of truncation positive value and truncation negative value that are symmetrical. The values of these two are the same but have opposite signs.

According to the embodiments of the present disclosure, the plurality of pairs of truncation threshold may be selected to quantize the data to be quantized separately. In some embodiments, some truncation thresholds may be selected at fixed intervals, for example, truncation thresholds may be selected every predetermined distance according to the maximum absolute value in the data to be quantized. In some embodiments, only a few truncation thresholds at specific locations may be selected, for example, a few predetermined proportions of the absolute maximum value are selected.

In some embodiments, one or more corresponding quantization parameters may be calculated according to each pair of truncation thresholds, and then the calculated quantization parameters may be used to quantize the data to be quantized. Alternatively, the data to be quantized may also be directly quantized through various formulas or models according to the truncation threshold without separately calculating the value of each quantization parameter.

At block 506, based on the difference between the mean value of the absolute value of each group of quantized data in the plurality of groups of quantized data and the mean value of the absolute value of the group of data to be quantized, the pair of truncation thresholds from the plurality of pairs of truncation thresholds is selected to quantize the group of data to be quantized. The inventors of the present application have discovered through research and a large number of experiments that the difference of the mean values of the absolute values of the data before and after quantization may reflect the precision loss before and after quantization, where the smaller the mean absolute difference, the smaller the precision loss of the quantization operation. Therefore, the embodiments of the present disclosure use the difference of the mean values of the absolute values of the data before and after the quantization as an index for selecting the optimal truncation threshold, which may achieve a smaller precision loss than the traditional KL method.

In some embodiments, the difference between the mean value of the absolute value of the quantized data and the mean value of the absolute value of the data to be quantized may be the difference between the two absolute mean values. Alternatively, the difference between the mean value of the absolute value of the quantized data and the mean value of the absolute value of the data to be quantized may be obtained by the following: dividing the difference between the two absolute mean values by the mean value of the absolute value of the data to be quantized, and then taking the absolute value.

In some embodiments, after selecting the optimal pair of truncation thresholds, the selected pair of truncation thresholds maybe used to quantize the group of data to be quantized to obtain the quantized data, including: truncating data that is greater than the truncation positive value in the group of data to be quantized as the truncation positive value, and truncating data that is less than the truncation negative value in the group of data to be quantized as the truncation negative value; and then inputting the obtained quantized data to the neural network model for processing.

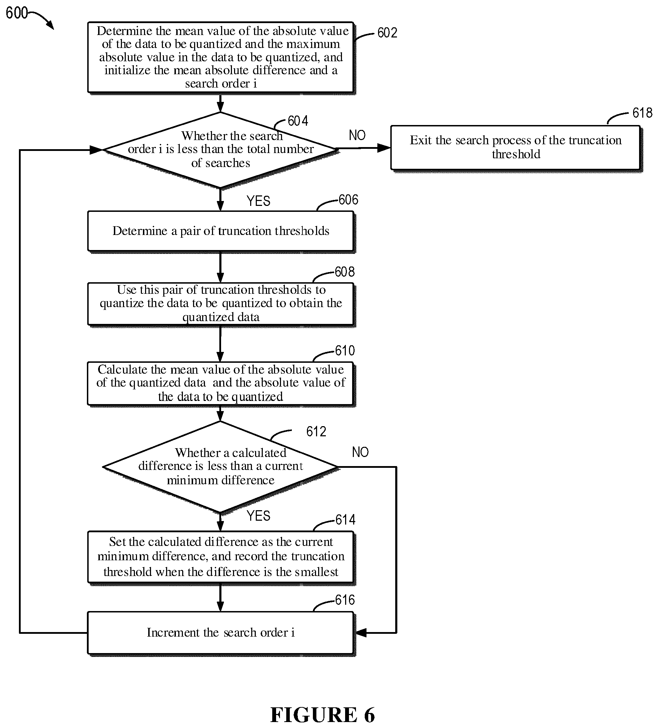

FIG. 6 is a flowchart of a method 600 for searching truncation thresholds for symmetric quantization according to an embodiment of the present disclosure, and the method 600 determines the pair of optimal truncation threshold based on the data to be quantized for data quantization.

At block 602, the mean value of the absolute value of the data to be quantized and the maximum absolute value in the data to be quantized are determined, where the mean value of the absolute value is a sum of the absolute values of all the data in the data to be quantized divided by the number of elements. In addition, a minimum mean difference is also initialized, for example, the maximum value in the floating-point numbers is initially set, and a search order i of acyclic search is initialized (for example, initialized to 0). In some embodiments, the search order i may also be initialized to half of the total number of searches; in other words, the search may start from the middle, which may improve search efficiency. According to the embodiments of the present disclosure, one or more rounds of the threshold search process maybe set, and each round of the threshold search may have the same or different total number of searches. In some embodiments, the total number of searches of each round maybe set in a range between 10 and 32. Generally speaking, the more the total number of searches, the longer the search time and the more precise the searched truncation threshold. However, when the total number of searches reaches a certain value, search performance may no longer be substantially improved.

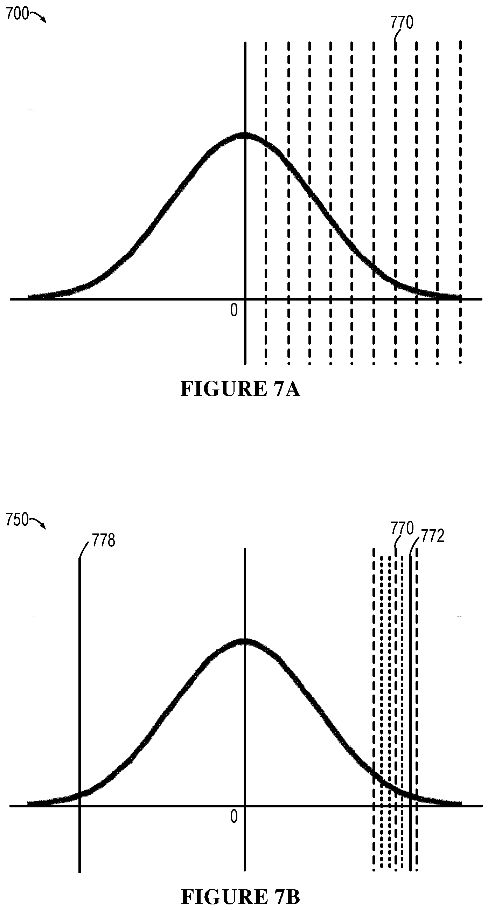

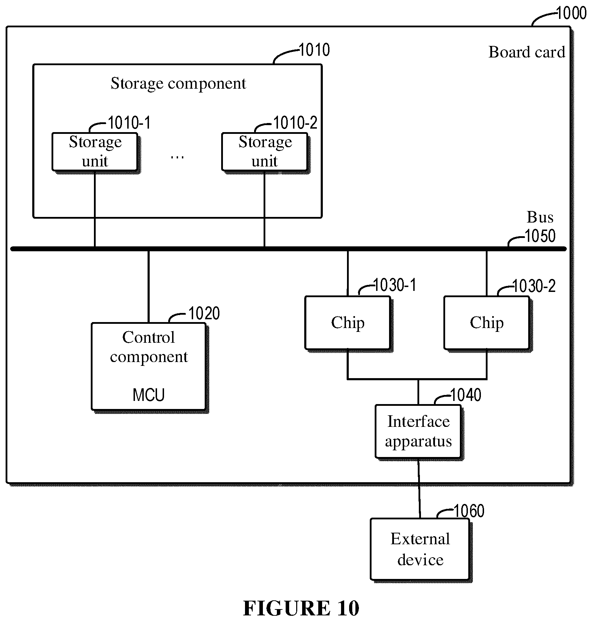

Next, a first round of coarse-grained truncation threshold search is started. FIG. 7A is a sample schematic diagram 700 for searching truncation thresholds for symmetric quantization in a coarse-grained manner according to an embodiment of the present disclosure. As shown in FIG. 7A, 10 candidate truncation thresholds may be determined in the data to be quantized (identified by a dotted line in FIG. 7A), and these 10 pairs of truncation thresholds (FIG. 7A only shows the positive truncation values, and the corresponding negative truncation values are not shown) maybe used in turn to perform quantization process. The pair of optimal truncation thresholds is determined according to the difference of the absolute value of the data before and after the quantization.

At block 604, it is determined whether the search order i is less than the total number of searches; in other words, when each pair of truncation thresholds is selected in turn for quantization, it is determined whether all calculations of the truncation thresholds have been completed. If the search order i is less than the total number of searches, at block 606, based on a current search order i, the pair of truncation thresholds is determined, and the pair of truncation thresholds are respectively -the maximum absolute value/total number of searches*(i+1), the maximum absolute value/total number of searches*(i+1). At block 608, this pair of truncation thresholds is used to quantize the data to be quantized to obtain the corresponding quantized data Quant_data_i, and then at block 610, the difference Distance_i = abs (Quant_data_mean_i-Data_mean)/ Data_mean between the mean value of the absolute value of the quantized data Quant_data_mean_i and the absolute value of the data to be quantized Data_mean is calculated.

At block 612, it is determined whether a calculated difference Distance_i is less than a current minimum difference. If the calculated difference Distance_i is less that the current minimum difference, at block 614, the calculated difference Distance_i is set as the current minimum difference, and the truncation threshold when the difference is the smallest is recorded, and then the search order i (for example, i++) is incremented at block 616. If the calculated difference Distance_i is not less than the current minimum difference at block 612, the search order i is directly incremented at block 616; in other words, a difference between a next pair of truncation thresholds is determined. Next, steps 604 to 616 are circulated until the value of the search order i is equal to the total number of searches, then the first round of the search process of the truncation threshold is exited at block 618. As shown in FIG. 7A, after the first round of search, it is determined that the difference corresponding to the truncation threshold at the dotted line 770 is the smallest. It can be seen that the process of truncation threshold search includes: using the plurality of pairs of truncation thresholds to quantize the to-be quantized data, and determining, from the plurality of groups of quantized data, a group of quantized data that has a smallest difference with the group of data to be quantized in terms of mean value of absolute value, and then selecting a pair of truncation thresholds corresponding to this group of quantized data from the plurality of pairs of truncation thresholds.

Optionally, a second round of fine-grained truncation threshold search process may be performed. The second round of search process may also refer to the method 600, except that the second round of search is performed within a certain range around the first round of optimal truncation threshold 770 (for example, the range between the previous truncation threshold and the next truncation threshold of the selected truncation threshold 770), which is a further refinement of first round of search results. For example, in the second round of searching, an interval between each pair of truncation thresholds may be (maximum absolute value*2)/(total number of searches in the first round*total number of searches in the second round). FIG. 7B is a schematic diagram for searching truncation thresholds for symmetric quantization in a fine-grained manner according to an embodiment of the present disclosure. Referring to FIG.7B, an optimal fine-grained truncation threshold is determined as 772 and 778 after the second search. Through a two-round search method, a more precise truncation threshold maybe obtained, and the precision loss caused by quantization maybe further reduced.

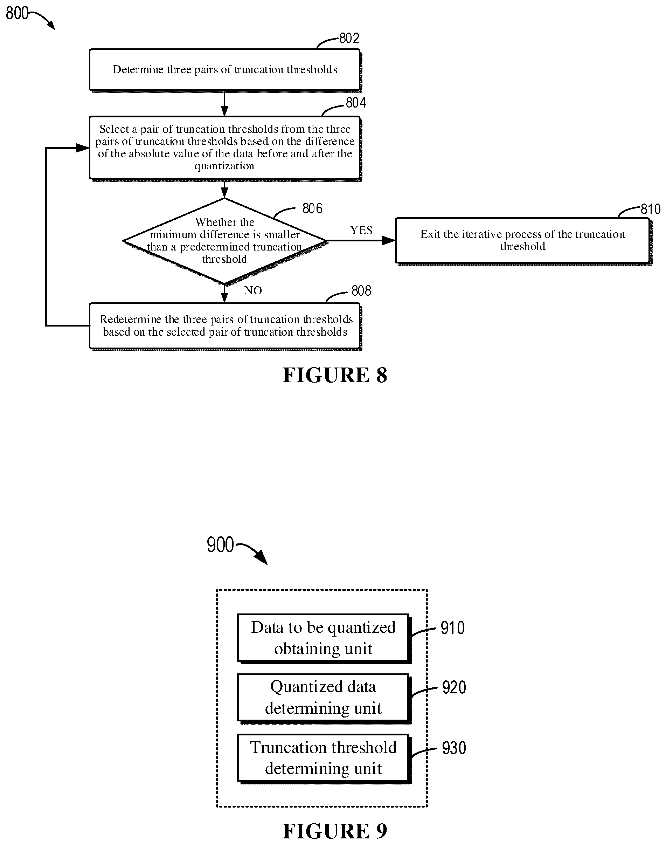

FIG. 8 illustrates a flowchart of a method 800 for iteratively searching optimal truncation thresholds according to an embodiment of the present disclosure; at block 802, three pairs of truncation thresholds are determined. For example, the maximum absolute value absmax of all the data in the data to be quantized $F_x$ may be determined. The three pairs of truncation thresholds maybe (-absmax/2, absmax/2), (-absmax* 3/4, absmax*3/4), and (-absmax, absmax) respectively At block 804, the three pairs of truncation thresholds are used to respectively quantize the data to be quantized to obtain the quantized data $\widehat{F_x 1}$、$\widehat{F_x 2}$、$\widehat{F_x 3}$ , and then the mean values $F_{mean}$, $\widehat{F_{1mean}}$、$\widehat{F_{2mean}}$、$\widehat{F_{3mean}}$ of the corresponding absolute values are calculated respectively $F_x$ , $\widehat{F_x 1}$、$\widehat{F_x 2}$、$\widehat{F_x 3}$ . A minimum difference diff_min is selected according to the formula $\mathrm{diff} = \mathrm{abs}(\frac{F_{mean} - \widehat{F_{mean}}}{\widehat{F_{mean}}}$ . At block 806, it is determined whether the minimum difference diff_min is smaller than a predetermined truncation threshold. If the minimum difference diff_min is not smaller that the predetermined truncation threshold, then at block 808, based on the selected pair of truncation thresholds (setting a value corresponding to the minimum difference diff_min as anew maximum absolute value), the three pairs of truncation thresholds are re-determined, and the above process is repeated until the minimum difference diff_min is less than the predetermined threshold, and then the iterative process of the truncation threshold is exited at block 810. In some embodiments, in addition to the iteration stopping condition that the minimum difference diff_min is less than the predetermined threshold, other iteration stopping conditions may also be set, such as the maximum number of iterations, reaching the predetermined minimum interval and so on. In addition, although the method 800 of FIG. 8 shows iteratively selecting the best pair of truncation thresholds, it may not perform the steps iteratively, but only perform them once, and then directly use the pair of truncation thresholds corresponding to the smallest difference diff_min as a final truncation threshold.

In some embodiments, the quantization parameters when using each pair of truncation thresholds to quantize data may be determined by the following equations (1)-(3),

$$\widehat{F_x} = round\left(\frac{F_x}{2^s \times f}\right) \times 2^s \times f \qquad (1).$$

$$S = \text{ceil}\left(log_2\left(\frac{p}{2^{n-1}-1}\right)\right) \qquad (2).$$

$$f = \frac{p}{2^S} \qquad (3).$$

In these formulas, p is the maximum absolute value in the data to be quantized, n represents the number of binary digits after quantization, S and f represent quantization parameters, and ceil represents rounding up.

According to the embodiments of the present disclosure, quantization parameters S1, f1, S2, f2, S3, and f3 may be obtained by selecting p as absmax/2, absmax*3/4, and absmax respectively, thereby obtaining the quantized data $\widehat{F_x}1$、 $\widehat{F_x}2$、 $\widehat{F_x}3$. Correspondingly, after selecting the pair of truncation thresholds, S and f corresponding to the pair of truncation thresholds are directly taken as the quantization parameters of the data to be quantized.

It should be noted that above mentioned embodiments, for the sake of conciseness, are all described as a series of action combinations, but those skilled in the art should know that the present disclosure is not limited by the described order of action since some steps may be performed in a different order or simultaneously according to the present disclosure. Secondly, those skilled in the art should also understand that the embodiments described in the specification are all optional, and the actions and units involved are not necessarily required for this disclosure.

It should be further noted that although the steps in the flowchart are displayed in sequence as indicated by the arrows, these steps are not necessarily executed in the order indicated by the arrows. Unless there is a clear description in this article, there is no strict order for the execution of these steps, and these steps may be executed in other orders. Moreover, at least part of the steps in the flowchart may include a plurality of sub-steps or a plurality of stages, which are not necessarily executed at the same time, but may be executed at different times. The execution of these sub-steps or stages is not necessarily performed sequentially, but may be performed alternately with other steps or sub-steps of other steps or at least a part of the stages.

FIG. 9 is a diagram of an apparatus 900 for processing data according to an embodiment of the present disclosure. As shown in FIG. 9, the apparatus 900 includes a data to be quantized obtaining unit 910, a quantized data determining unit 920, and a truncation threshold selection unit 930. The data to be quantized obtaining unit 901 is configured to obtain the group of data to be quantized for the machine learning model. The quantized data determining unit 920 is configured to quantize a group of data to be quantized respectively by using a plurality of pairs of truncation thresholds to determine a plurality of groups of quantized data, where each pair of truncation thresholds in the plurality of pairs of truncation thresholds includes a truncation positive value and a truncation negative value that are symmetrical. The truncation threshold selection unit 930 is configured to select a pair of truncation threshold from the plurality of pairs of truncation thresholds based on a difference between a mean value of an absolute value of each group of quantized data and a mean value of an absolute value of the group of data to be quantized to quantize the group of data to be quantized.

In addition, the data to be quantized obtaining unit 910, the quantized data determining unit 920, and the truncation threshold selection unit 930 in the apparatus 900 may also be configured to perform steps and/or actions according to various embodiments of the present disclosure.

It should be understood that the foregoing apparatus embodiments are only illustrative, and the apparatus of the present disclosure may also be implemented in other ways. For example, the division of the units/modules in the foregoing embodiment is only division of logical function, and there may be other division methods in actual implementation. For example, a plurality of units, modules, or components may be combined together or integrated into another system, or some features may be ignored or not implemented.

In addition, unless specified, each functional units/modules in each embodiments of the present disclosure may be integrated into one unit/module. Alternatively, each unit/module may exist alone physically, or two or more units/modules may be integrated together. The above-mentioned integrated units/modules may be implemented in the form of hardware or in the form of software program units.

When the above-mentioned integrated units/modules are implemented in the form of hardware, the hardware may be a digital circuit, an analog circuit, and the like. Physical implementation of the hardware structure may include, but is not limited to, a transistor, a memristor, and the like. Unless specified, the artificial intelligence processor may be any appropriate hardware processor, such as a CPU, a GPU, an FPGA, a DSP, an ASIC, and the like. Unless specified, the storage unit may be any suitable magnetic storage medium or magnetooptical storage medium, such as an RRAM (resistive random-access memory), a DRAM (dynamic random access memory), a SRAM (static random-access memory), an EDRAM (enhanced dynamic random access memory), an HBM (high-bandwidth memory), an HMC (hybrid memory cube), and the like.

If the integrated units/modules are implemented in the form of software program modules and sold or used as an independent product, they may be stored in a computer-readable memory. Based on such understanding, the essence of the technical solutions of the present disclosure, or a part of the present disclosure that contributes to the prior art, or all or part of the technical solutions may be embodied in the form of a software product. The software product is stored in a memory, which includes several instructions to enable a computer device (which may be a personal computer, a server, or a network device, *and the like*.) to perform all or part of the steps of the methods described in each embodiment of the present disclosure. The foregoing memory includes: a USB flash drive, a read-only memory (ROM), a random-access memory (RAM), a mobile hard disk, a magnetic disk or an optical disc, and other media that may store program codes.

An embodiment provides a readable storage medium, which stores a computer program. When the computer program is executed, methods of each embodiment according to the present disclosure is implemented.

In an embodiment, an artificial intelligence chip including the above-mentioned data apparatus for processing data is disclosed.

An embodiment provides a board card, which includes a storage component, an interface apparatus, a control component, and the above-mentioned artificial intelligence chip. The artificial intelligence chip is connected to the storage component, the control component, and the interface apparatus respectively. The storage component is used to store data; the interface apparatus is used to realize data transmission between the artificial intelligence chip and the external device. The control component is used to monitor state of the artificial intelligence chip.

FIG. 10 shows a structural block diagram of a board card 1000 according to an embodiment of the present disclosure. Referring to FIG. 10, the above-mentioned board card 1000 may include other supporting components in addition to the chip 1030-1 and 1030-2 (collectively referred to as chip 1030), and supporting components include, but are not limited to: a storage component 1010, an interface apparatus 1040 and a control component 1020. The interface apparatus 1040 may be connected to an external device 1060. The storage component 1010 is connected to the artificial intelligence chip 1030 through a bus 1050 for storing data. The storage component 1010 may include a plurality of groups of storage units 1010-1 and 1010-2. Each group of storage units is connected to the artificial intelligence chip through the bus. 1050 It may be understood that each group of the storage units may be a DDR SDRAM (double data rate synchronous dynamic random-access memory).

DDR may double the speed of SDRAM without increasing the clock frequency. DDR allows data to be read on the rising and falling edges of the clock pulse. The speed of DDR is twice that of a standard SDRAM. In an embodiment, the storage apparatus may include 4 groups of storage units. Each group of storage units may include a plurality of DDR4 particles (chips). In an embodiment, four 72-bit DDR4 controllers may be arranged inside the artificial intelligence chip, where 64bit of each 72-bit DDR4 controller is for data transfer and 8bit is for ECC (error checking and correcting). It may be understood that when each group of the storage units adopts DDR4-3200 particles, the theoretical bandwidth of data transmission may reach 25600MB/s.

In an embodiment, each group of the storage units include a plurality of DDR SDRAMs arranged in parallel. DDR may transfer data twice per clock cycle. A DDR controller may be arranged inside the chip to control the data transmission and data storage of each storage unit.

The interface apparatus may be electrically connected to the artificial intelligence chip. The interface apparatus is configured to realize data transfer between the artificial intelligence chip and an external device (such as a server or a computer). For example, in an embodiment, the interface apparatus may be a standard PCIe interface. For instance, data to be processed may be transferred by a server through the standard PCIe interface to the chip, thereby realizing data transfer. In some embodiments, when a PCIe 3.0 X 16 interface is adopted for transferring, the theoretical bandwidth may reach 16000MB/s. In another embodiment, the interface apparatus may also be another interface. The present disclosure does not restrict a specific form of other interfaces as long as the interface unit may realize a transferring function. In addition, a computation result of the artificial intelligence chip may still be transferred by the interface apparatus to an external device (such as a server).

The control component is electrically connected to the artificial intelligence chip. The control component is configured to monitor a state of the artificial intelligence chip. Specifically, the artificial intelligence chip and the control component maybe electrically connected through an SPI (Serial Peripheral Interface). The control component may include an MCU (microcontroller unit). If the artificial intelligence chip includes a plurality of processing chips, a plurality of processing cores, or a plurality of processing circuits, the chip is capable of driving a plurality of loads. In this case, the artificial intelligence chip may be in different working state such as a multi-load state and a light-load state. The working state of the plurality of processing chips, the plurality of processing cores, and/or a plurality of processing circuits maybe regulated and controlled by the control apparatus.

In a possible implementation, an electronic device including the above-mentioned artificial intelligence chip is disclosed. The electronic device includes a data processing apparatus, a robot, a computer, a printer, a scanner, a tablet computer, a smart terminal, a mobile phone, a traffic recorder, a navigator, a sensor, a webcam, a server, a cloud-based server, a camera, a video camera, a projector, a watch, a headphone, a mobile storage, a wearable device, a vehicle, a household appliance, and/or a medical device.

The vehicle includes an airplane, a ship, and/or a car; the household electrical appliance may include a television, an air conditioner, a microwave oven, a refrigerator, an electric rice cooker, a humidifier, a washing machine, an electric lamp, a gas cooker, and a range hood; and the medical device may include a nuclear magnetic resonance spectrometer, a B-ultrasonic scanner, and/or an electrocardiograph.

In the above-mentioned embodiments, descriptions of each embodiment have their own emphasis. For parts that are not described in detail in an embodiment, reference may be made to related descriptions of other embodiments. The technical features of the above embodiments may be combined arbitrarily. In order to make the description concise, all possible combinations of the technical features in the above embodiments are not described. However, as long as there is no contradiction in the combination of these technical features, they should be considered in the range described in this specification.

The embodiments of the present disclosure are described in detail above, and specific examples are used to illustrate principles and implementations of the present disclosure. The descriptions of the above embodiments are only used to help understand the methods and core ideas of the present disclosure. Persons of ordinary skill in the art may change or transform the implementation and application scope according to the ideas of the present application. In summary, the content of this specification should not be construed as a limitation on the present disclosure.

**Claims**

1. A method for processing data, comprising:

   obtaining a group of data to be quantized for a machine learning model;
   quantizing the group of data to be quantized respectively through using a plurality of pairs of truncation thresholds to determine a plurality of groups of quantized data, wherein each pair of truncation thresholds in the plurality of pairs of truncation thresholds includes a truncation positive value and a truncation negative value that are symmetrical; and
   selecting a pair of truncation thresholds from the plurality of pairs of truncation thresholds based on a difference between a mean value of an absolute value of each group of quantized data in the plurality of groups of quantized data and a mean value of an absolute value of the group of data to be quantized to quantize the group of data to be quantized,
   wherein the quantized data is represented in a fixed-point format, and the fixed-point format employs a fixed number of bits.

2. The method of claim 1, wherein determining the plurality of groups of quantized data includes:

   determining a maximum absolute value of all data in the group of data to be quantized; and
   determining the plurality of pairs of truncation thresholds based on the maximum absolute value.

3. The method of claim 2, wherein determining the plurality of groups of quantized data includes:

   determining a first truncation positive value based on the maximum absolute value, a predetermined total number of searches, and a current search order;
   quantizing the group of data to be quantized through using a first pair of truncation thresholds to determine a first group of quantized data, wherein the first pair of truncation thresholds includes a first truncation positive value and a first truncation negative value that is opposite to the first positive value; and
   determining a first difference between a mean value of an absolute value of the first group of quantized data and the mean value of the absolute value of the group of data to be quantized.

4. The method of claim 3, wherein determining the plurality of groups of quantized data includes:

   iteratively searching through a sequence of truncation threshold pairs, each round representing an incremental step in a series of searches up to a predetermined total number of searches;
   in each round, determining a second truncation positive value based on the maximum absolute value, the predetermined total number of searches, and the current search order;

quantizing the group of data to be quantized through using a second pair of truncation thresholds to determine a second group of quantized data, wherein the second pair of truncation thresholds includes a second truncation positive value and a second truncation negative value that is opposite to the second truncation positive value; and determining a second difference between a mean value of an absolute value of the second group of quantized data and the mean value of the absolute value of the group of data to be quantized.

5. The method of any of claims 1-4, wherein selecting the pair of truncation thresholds from the plurality of pairs of truncation threshold includes:

determining, from the plurality of groups of quantized data, a group of quantized data that has a smallest difference with the group of data to be quantized in terms of mean value of absolute value; and selecting a pair of truncation thresholds corresponding to the group of quantized data from the plurality of pairs of truncation thresholds.

6. The method of claim 5, further comprising:

determining a truncation search range associated with the selected pair of truncation thresholds; determining a plurality of new pairs of truncation thresholds within the truncation search range; quantizing the group of data to be quantized respectively through using the plurality of new pairs of truncation thresholds to determine a plurality of new groups of quantized data; and selecting a new pair of truncation thresholds from the plurality of new pairs of truncation thresholds based on a difference between the mean value of the absolute value of the group of data to be quantized and a mean value of an absolute value of each group of the plurality of new groups of quantized data.

7. The method of claim 1, wherein quantizing the group of data to be quantized respectively through using the plurality of pairs of truncation thresholds to determine the plurality of groups of quantized data includes:

determining a maximum absolute value of all data in the group of data to be quantized; determining three pairs of truncation thresholds based on the maximum absolute value, wherein among the three pairs of truncation thresholds, a first pair of truncation thresholds corresponds to half of the maximum absolute value and its opposite value, and a second pair of truncation thresholds corresponds to a value equivalent to three-quarters of the maximum absolute value and its opposite value, and a third pair of truncation thresholds includes the maximum absolute value and an opposite of the maximum absolute value; and quantizing the group of data to be quantized respectively through using the three pairs of truncation thresholds to determine three groups of quantized data.

8. The method of claim 7, wherein selecting the pair of truncation thresholds from the plurality of pairs of truncation thresholds includes:
executing the following actions iteratively until a stop condition is met:

selecting the pair of truncation thresholds from the three pairs of truncation thresholds; determining whether a difference corresponding to the selected pair of truncation thresholds is less than a predetermined threshold; stopping the iterative execution of the actions in response to the difference being less than the predetermined threshold; and redetermining the three pairs of truncation thresholds in response to the difference being greater than the predetermined threshold based on the selected pair of truncation thresholds.

9. The method of any of claims 1- 8, wherein the group of data to be quantized is a group of floating-point numbers in a neural network model, and the method further includes:

quantize the group of data to be quantized using the selected pair of truncation thresholds to obtain quantized data, wherein the group of data to be quantized includes: setting a value that is greater than the truncation positive value in the group of data to be quantized as the truncation positive value, and setting a value that is less than the truncation negative value in the group of data to be quantized as the truncation negative value; and inputting the obtained quantized data to the neural network model for processing.

10. An apparatus for data processing, comprising:

a data to be quantized obtaining unit configured to obtain a group of data to be quantized for a machine learning model;

a quantized data determining unit configured to quantize the group of data to be quantized to be quantized respectively by using a plurality of pairs of truncation thresholds to determine a plurality of groups of quantized data, wherein each pair of truncation thresholds in the plurality of pairs of truncation thresholds includes a truncation positive value and a truncation negative value that are symmetrical; and

a truncation threshold selection unit configured to select a pair of truncation thresholds from the plurality of pairs of truncation thresholds based on a difference between a mean value of an absolute value of each group of quantized data and a mean value of an absolute value of the group of data to be quantized to quantize the group of data to be quantized,

wherein the quantized data is represented in a fixed-point format, and the fixed-point format employs a fixed number of bits.

11. A computer readable storage medium, on which a computer program is stored, and when the program is executed, the method of any one of claims 1-9 is realized.

**Patentansprüche**

1. Ein Verfahren zur Verarbeitung von Daten, umfassend:

Erhalten einer Gruppe von zu quantisierenden Daten für ein maschinelles Lernmodell;

Quantisieren der Gruppe von zu quantisierenden Daten jeweils durch Verwendung einer Vielzahl von Paaren von Abschneideschwellenwerten, um eine Vielzahl von Gruppen von quantisierten Daten zu bestimmen, wobei jedes Paar von Abschneideschwellenwerten in der Vielzahl von Paaren von Abschneideschwellenwerten einen positiven Abschneidewert und einen negativen Abschneidewert umfasst, die symmetrisch sind; und

Auswählen eines Paares von Abschneideschwellenwerten aus der Vielzahl von Paaren von Abschneideschwellenwerten basierend auf einer Differenz zwischen einem Mittelwert eines Absolutwerts jeder Gruppe von quantisierten Daten in der Vielzahl von Gruppen von quantisierten Daten und einem Mittelwert eines Absolutwerts der Gruppe von zu quantisierenden Daten, um die Gruppe von zu quantisierenden Daten zu quantisieren,

wobei die quantisierten Daten in einem Festkommaformat dargestellt werden und das Festkommaformat eine feste Anzahl von Bits verwendet.

2. Das Verfahren nach Anspruch 1, wobei Bestimmen der Vielzahl von Gruppen von quantisierten Daten umfasst:

Bestimmen eines maximalen Absolutwerts aller Daten in der Gruppe von zu quantisierenden Daten; und

Bestimmen der Vielzahl von Paaren von Abschneideschwellenwerten basierend auf dem maximalen Absolutwert.

3. Das Verfahren nach Anspruch 2, wobei Bestimmen der Vielzahl von Gruppen von quantisierten Daten umfasst:

Bestimmen eines ersten positiven Abschneidewerts basierend auf dem maximalen Absolutwert, einer vorbestimmten Gesamtzahl von Suchen und einer aktuellen Suchreihenfolge;

Quantisieren der Gruppe von zu quantisierenden Daten durch Verwendung eines ersten Paares von Abschneideschwellenwerten, um eine erste Gruppe von quantisierten Daten zu bestimmen, wobei das erste Paar von Abschneideschwellenwerten einen ersten positiven Abschneidewert und einen ersten negativen Abschneidewert umfasst, der dem ersten positiven Abschneidewert entgegengesetzt ist; und

Bestimmen einer ersten Differenz zwischen einem Mittelwert eines Absolutwerts der ersten Gruppe von quantisierten Daten und dem Mittelwert des Absolutwerts der Gruppe von zu quantisierenden Daten.

4. Das Verfahren nach Anspruch 3, wobei Bestimmen der Vielzahl von Gruppen von quantisierten Daten umfasst:

iteratives Suchen einer Folge von Abschneideschwellenwertenpaaren, wobei jede Runde einen inkrementellen Schritt in einer Reihe von Suchen bis zu einer vorbestimmten Gesamtzahl von Suchen darstellt;

in jeder Runde, Bestimmen eines zweiten positiven Abschneidewertes basierend auf dem maximalen Absolutwert, der vorbestimmten Gesamtzahl von Suchen und der aktuellen Suchreihenfolge;

Quantisieren der Gruppe von zu quantisierenden Daten durch Verwendung eines zweiten Paares von Abschneideschwellenwerten, um eine zweite Gruppe von quantisierten Daten zu bestimmen, wobei das zweite Paar von Abschneideschwellenwerten einen zweiten positiven Abschneidewert und einen zweiten negativen Abschneidewert umfasst, der dem zweiten positiven Abschneidewert entgegengesetzt ist; und

Bestimmen einer zweiten Differenz zwischen einem Mittelwert eines Absolutwerts der zweiten Gruppe von quantisierten Daten und dem Mittelwert des Absolutwerts der Gruppe von zu quantisierenden Daten.

**5.** Das Verfahren nach einem der Ansprüche 1 bis 4, wobei Auswählen des Paars von Abschneideschwellenwerten aus der Vielzahl von Paaren von Abschneideschwellenwerten umfasst:

Bestimmen einer Gruppe von quantisierten Daten, die in Hinsicht auf Mittelwert von Absolutwert die geringste Differenz zu der Gruppe von zu quantisierenden Daten aufweist, aus der Vielzahl von Gruppen von quantisierten Daten; und

Auswählen eines Paars von Abschneideschwellenwerten, das der Gruppe von quantisierten Daten entspricht, aus der Vielzahl von Paaren von Abschneideschwellenwerten.

**6.** Das Verfahren nach Anspruch 5, ferner umfassend:

Bestimmen eines mit dem ausgewählten Paar von Abschneideschwellenwerten verbundenen Abschneide-uchbereichs;

Bestimmen einer Vielzahl von neuen Paaren von Abschneideschwellenwerten innerhalb des Abschneide-uchbereichs;

Quantisieren der Gruppe von zu quantisierenden Daten jeweils durch Verwendung der Vielzahl von neuen Paaren von Abschneideschwellenwerten, um eine Vielzahl von neuen Gruppen von quantisierten Daten zu bestimmen; und

Auswählen eines neuen Paares von Abschneideschwellenwerten aus der Vielzahl von neuen Paaren von Abschneideschwellenwerten basierend auf einer Differenz zwischen dem Mittelwert des Absolutwerts der Gruppe von zu quantisierenden Daten und einem Mittelwert eines Absolutwerts jeder Gruppe von der Vielzahl von neuen Gruppen von quantisierten Daten.

**7.** Das Verfahren nach Anspruch 1, wobei Quantisieren der Gruppe von zu quantisierenden Daten jeweils durch Verwendung der Vielzahl von Paaren von Abschneideschwellenwerten, um die Vielzahl von Gruppen von quantisierten Daten zu bestimmen, umfasst:

Bestimmen eines maximalen Absolutwerts aller Daten in der Gruppe von zu quantisierenden Daten;

Bestimmen von drei Paaren von Abschneideschwellenwerten basierend auf dem maximalen Absolutwert, wobei unter den drei Paaren von Abschneideschwellenwerten ein erstes Paar von Abschneideschwellenwerten eine Hälfte des maximalen Absolutwerts und ihren Gegenwert umfasst, und ein zweites Paar von Abschneideschwellenwerten einen Wert umfasst, der drei Vierteln des maximalen Absolutwerts und ihrem Gegenwert entspricht, und ein drittes Paar von Abschneideschwellenwerten den maximalen Absolutwert und einen Gegenwert des maximalen Absolutwerts umfasst; und

Quantisieren der Gruppe von zu quantisierenden Daten jeweils durch Verwendung der drei Paare von Abschneideschwellenwerten, um drei Gruppen von quantisierten Daten zu bestimmen.

**8.** Das Verfahren nach Anspruch 7, wobei Auswählen des Paares von Abschneideschwellenwerten aus der Vielzahl von Paaren von Abschneideschwellenwerten umfasst:
iteratives Ausführen der folgenden Aktionen, bis eine Stoppbedingung erfüllt ist:

Auswählen des Paares von Abschneideschwellenwerten aus den drei Paaren von Abschneideschwellenwerten;

Bestimmen, ob eine Differenz, die dem ausgewählten Paar von Abschneideschwellenwerten entspricht, kleiner als ein vorbestimmter Schwellenwert ist;

Beenden des iterativen Ausführens von den Aktionen als Reaktion darauf, dass die Differenz kleiner als der vorbestimmte Schwellenwert ist; und

Neubestimmen der drei Paare von Abschneideschwellenwerten als Reaktion darauf, dass die Differenz größer als der vorbestimmte Schwellenwert ist, basierend auf dem ausgewählten Paar von Abschneideschwellenwerten.

**9.** Das Verfahren nach einem der Ansprüche 1 bis 8, wobei die Gruppe von zu quantisierenden Daten eine Gruppe von Gleitkommazahlen in einem neuronalen Netzwerkmodell ist und das Verfahren ferner umfasst:

Quantisieren der Gruppe von zu quantisierenden Daten unter Verwendung des ausgewählten Paares von Abschneideschwellenwerten, um quantisierte Daten zu erhalten, wobei die Gruppe von zu quantisierenden Daten umfasst: Setzen eines Wertes, der größer als der positive Abschneidewert in der Gruppe von zu quantisierenden Daten ist, als den positiven Abschneidewert, und Setzen eines Wertes, der kleiner als der negative Abschneidewert in der Gruppe von zu quantisierenden Daten ist, als den negativen Abschneidewert; und

Eingeben der erhaltenen quantisierten Daten in das neuronale Netzwerkmodell zur Verarbeitung.

10. Eine Vorrichtung zur Datenverarbeitung, umfassend:

eine Einheit zum Erhalten zu quantisierender Daten, die dazu konfiguriert ist, eine Gruppe von zu quantisierenden Daten für ein maschinelles Lernmodell zu erhalten;

eine Einheit zum Bestimmen quantisierter Daten, die dazu konfiguriert ist, die Gruppe von zu quantisierenden Daten jeweils durch Verwendung einer Vielzahl von Paaren von Abschneideschwellenwerten zu quantisieren, um eine Vielzahl von Gruppen von quantisierten Daten zu bestimmen, wobei jedes Paar von Abschneideschwellenwerten in der Vielzahl von Paaren von Abschneideschwellenwerten einen positiven Abschneidewert und einen negativen Abschneidewert umfasst, die symmetrisch sind; und

eine Einheit zum Auswählen von Abschneideschwellenwerten, die dazu konfiguriert ist, ein Paar von Abschneideschwellenwerten aus der Vielzahl von Paaren von Abschneideschwellenwerten basierend auf einer Differenz zwischen einem Mittelwert eines Absolutwerts jeder Gruppe von quantisierten Daten und einem Mittelwert eines Absolutwerts der Gruppe von zu quantisierenden Daten auszuwählen, um die Gruppe von zu quantisierenden Daten zu quantisieren,

wobei die quantisierten Daten in einem Festkommaformat dargestellt sind und das Festkommaformat eine feste Anzahl von Bits verwendet.

11. Ein computerlesbares Speichermedium, auf dem ein Computerprogramm gespeichert ist, und das Verfahren nach einem der Ansprüche 1 bis 9 realisiert wird, wenn das Programm ausgeführt wird.

**Revendications**

1. Procédé de traitement de données, comprenant les étapes suivantes:

obtenant un groupe de données à quantifier pour un modèle d'apprentissage automatique;

quantifiant le groupe de données à quantifier respectivement en utilisant une pluralité de paires de seuils de tronçonnage afin de déterminer une pluralité de groupes de données quantifiées, dans lequel chaque paire de seuils de tronçonnage de la pluralité de paires de seuils de tronçonnage comprend une valeur positive de tronçonnage et une valeur négative de tronçonnage qui sont symétriques; et

sélectant une paire de seuils de tronçonnage parmi la pluralité de paires de seuils de tronçonnage sur la base d'une différence entre une valeur moyenne d'une valeur absolue de chaque groupe de données quantifiées de la pluralité de groupes de données quantifiées et une valeur moyenne d'une valeur absolue du groupe de données à quantifier, afin de quantifier le groupe de données à quantifier,

dans lequel les données quantifiées sont représentées en un format à point fixe, et le format à point fixe emploie un nombre fixe de bits.

2. Procédé selon la revendication 1, dans lequel la détermination de la pluralité de groupes de données quantifiées comprend les étapes suivantes:

déterminant une valeur absolue maximale de toutes les données du groupe de données à quantifier; et

déterminant la pluralité de paires de seuils de tronçonnage sur la base de la valeur absolue maximale.

3. Procédé selon la revendication 2, dans lequel la détermination de la pluralité de groupes de données quantifiées comprend les étapes suivantes:

déterminant une première valeur positive de tronçonnage sur la base de la valeur absolue maximale, d'un nombre total prédéterminé de recherches, et d'un ordre de recherche courant;

quantifiant le groupe de données à quantifier en utilisant une première paire de seuils de tronçonnage afin de déterminer un premier groupe de données quantifiées, dans lequel la première paire de seuils de tronçonnage comprend une première valeur positive de tronçonnage et une première valeur négative de tronçonnage qui est opposée à la première valeur positive; et

déterminant une première différence entre une valeur moyenne d'une valeur absolue du premier groupe de données quantifiées et la valeur moyenne de la valeur absolue du groupe de données à quantifier.

**4.** Procédé selon la revendication 3, dans lequel la détermination de la pluralité de groupes de données quantifiées comprend les étapes suivantes:

recherchant itérativement à travers une séquence de paires de seuils de tronçonnage, chaque tour représentant une étape incrémentale dans une série de recherches jusqu'à un nombre total prédéterminé de recherches;

à chaque tour, déterminant une deuxième valeur positive de tronçonnage sur la base de la valeur absolue maximale, du nombre total prédéterminé de recherches, et de l'ordre de recherche courant;

quantifiant le groupe de données à quantifier en utilisant une deuxième paire de seuils de tronçonnage afin de déterminer un deuxième groupe de données quantifiées, dans lequel la deuxième paire de seuils de tronçonnage comprend une deuxième valeur positive de tronçonnage et une deuxième valeur négative de tronçonnage qui est opposée à la deuxième valeur positive de tronçonnage; et

déterminant une deuxième différence entre une valeur moyenne d'une valeur absolue du deuxième groupe de données quantifiées et la valeur moyenne de la valeur absolue du groupe de données à quantifier.

**5.** Procédé selon l'une quelconque des revendications 1 à 4, dans lequel la sélection de la paire de seuils de tronçonnage parmi la pluralité de paires de seuils de tronçonnage comprend les étapes suivantes:

déterminant, parmi la pluralité de groupes de données quantifiées, un groupe de données quantifiées qui présente la plus petite différence avec le groupe de données à quantifier en termes de valeur moyenne de valeur absolue; et

sélectant une paire de seuils de tronçonnage correspondant au groupe de données quantifiées parmi la pluralité de paires de seuils de tronçonnage.

**6.** Procédé selon la revendication 5, comprenant en outre les étapes suivantes:

déterminant une plage de recherche de tronçonnage associée à la paire de seuils de tronçonnage sélectionnée;

déterminant une pluralité de nouvelles paires de seuils de tronçonnage dans la plage de recherche de tronçonnage;

quantifiant le groupe de données à quantifier respectivement en utilisant la pluralité de nouvelles paires de seuils de tronçonnage afin de déterminer une pluralité de nouveaux groupes de données quantifiées; et

sélectant une nouvelle paire de seuils de tronçonnage parmi la pluralité de nouvelles paires de seuils de tronçonnage sur la base d'une différence entre la valeur moyenne de la valeur absolue du groupe de données à quantifier et une valeur moyenne d'une valeur absolue de chaque groupe de la pluralité de nouveaux groupes de données quantifiées.

**7.** Procédé selon la revendication 1, dans lequel la quantification du groupe de données à quantifier respectivement en utilisant la pluralité de paires de seuils de tronçonnage afin de déterminer la pluralité de groupes de données quantifiées comprend les étapes suivantes:

déterminant une valeur absolue maximale de toutes les données du groupe de données à quantifier;

déterminant trois paires de seuils de tronçonnage sur la base de la valeur absolue maximale, dans lequel parmi les trois paires de seuils de tronçonnage, une première paire de seuils de tronçonnage correspond à la moitié de la valeur absolue maximale et à sa valeur opposée, et une deuxième paire de seuils de tronçonnage correspond à une valeur équivalente aux trois quarts de la valeur absolue maximale et à sa valeur opposée, et une troisième paire de seuils de tronçonnage comprend la valeur absolue maximale et un opposé de la valeur absolue maximale; et

quantifiant le groupe de données à quantifier respectivement en utilisant les trois paires de seuils de tronçonnage afin de déterminer trois groupes de données quantifiées.

**8.** Procédé selon la revendication 7, dans lequel la sélection de la paire de seuils de tronçonnage parmi la pluralité de paires de seuils de tronçonnage comprend:

exécutant itérativement les actions suivantes jusqu'à ce qu'une condition d'arrêt soit satisfaite:

sélectant la paire de seuils de tronçonnage parmi les trois paires de seuils de tronçonnage;
déterminant si une différence correspondant à la paire de seuils de tronçonnage sélectionnée est inférieure à un seuil prédéterminé;
arrêtant de l'exécution itérative des actions en réponse à la différence inférieure au seuil prédéterminé; et redéterminant les trois paires de seuils de tronçonnage en réponse à la différence supérieure au seuil prédéterminé sur la base de la paire de seuils de tronçonnage sélectionnée.

9. Procédé selon l'une quelconque des revendications 1 à 8, dans lequel le groupe de données à quantifier est un groupe de nombres à point flottante dans un modèle de réseau nerveux, et le procédé comprend en outre les étapes suivantes:

quantifiant le groupe de données à quantifier en utilisant la paire de seuils de tronçonnage sélectionnée afin d'obtenir des données quantifiées, dans lequel la quantification du groupe de données à quantifier comprend: prenant une valeur qui est supérieure à la valeur positive de tronçonnage du groupe de données à quantifier comme la valeur positive de tronçonnage, et prenant une valeur qui est inférieure à la valeur négative de tronçonnage du groupe de données à quantifier comme la valeur négative de tronçonnage; et entrant les données quantifiées obtenues au modèle de réseau nerveux pour traitement.

10. Appareil de traitement de données, comprenant:

une unité d'obtention de données à quantifier configurée pour obtenir un groupe de données à quantifier pour un modèle d'apprentissage automatique;
une unité de détermination de données quantifiées configurée pour quantifier le groupe de données à quantifier respectivement en utilisant une pluralité de paires de seuils de tronçonnage afin de déterminer une pluralité de groupes de données quantifiées, dans lequel chaque paire de seuils de tronçonnage de la pluralité de paires de seuils de tronçonnage comprend une valeur positive de tronçonnage et une valeur négative de tronçonnage qui sont symétriques; et
une unité de sélection de seuil de tronçonnage configurée pour sélectionner une paire de seuils de tronçonnage parmi la pluralité de paires de seuils de tronçonnage sur la base d'une différence entre une valeur moyenne d'une valeur absolue de chaque groupe de données quantifiées et une valeur moyenne d'une valeur absolue du groupe de données à quantifier afin de quantifier le groupe de données à quantifier,
dans lequel les données quantifiées sont représentées en un format à point fixe, et le format à point fixe emploie un nombre fixe de bits.

11. Support de stockage lisible par ordinateur, sur lequel est stocké un programme informatique, et lorsque le programme est exécuté, le procédé selon l'une quelconque des revendications 1 à 9 est réalisé.

**FIGURE 1**

**FIGURE 2**

FIGURE 3

FIGURE 4A

FIGURE 4B

500

502

Obtain the group of data to be quantized for the machine
learning model

504

Use a plurality of pairs of truncation thresholds to
quantize the group of data to be quantized respectively
to determine a plurality of groups of quantized data

506

Select the pair of truncation thresholds from the plurality of
pairs of truncation thresholds to quantize the group of data to
be quantized based on the difference between the mean value
of the absolute value of each group of quantized data in the
plurality of groups of quantized data and the mean value of
the absolute value of the group of data to be quantized

## FIGURE 5

**FIGURE 6**

700

770

0

**FIGURE 7A**

750

778

770 772

0

**FIGURE 7B**

800

802

Determine three pairs of truncation thresholds

804

Select a pair of truncation thresholds from the three pairs of truncation thresholds based on the difference of the absolute value of the data before and after the quantization

806

Whether the minimum difference is smaller than a predetermined truncation threshold

YES

810

Exit the iterative process of the truncation threshold

NO

808

Redetermine the three pairs of truncation thresholds based on the selected pair of truncation thresholds

**FIGURE 8**

900

Data to be quantized obtaining unit — 910

Quantized data determining unit — 920

Truncation threshold determining unit — 930

**FIGURE 9**

**FIGURE 10**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019095777 A1

**Non-patent literature cited in the description**

- **PELUSO et al.** *Enabling Energy-Efficient Unsupervised Monocular Depth Estimation on ARMv7-Based Platforms*